# EUROPÄISCHE PATENTSCHRIFT

(11) **EP 1 627 754 B1**
(45) Veröffentlichungstag und Bekanntmachung des Hinweises auf die Patenterteilung: **13.08.2008**
(21) Anmeldenummer: 05014824.6
(22) Anmeldetag: 08.07.2005
(51) Int. Cl.: B60D 1/36

(54) **Ankuppelhilfsvorrichtung für Zugkugelkupplungen**
Trailer hitch coupling aid
Dispositif d'aide pour attelage

(30) Priorität: 18.08.2004 DE 202004012928 U
(43) Veröffentlichungstag der Anmeldung: 22.02.2006
(73) Patentinhaber: Krassort, Georg, 33428 Harsewinkel/Greffen (DE)
(72) Erfinder: Krassort, Georg, 33428 Harsewinkel/Greffen (DE)
(74) Vertreter: Bünemann, Egon

(56) Entgegenhaltungen:
- US-A- 5 927 742
- US-A- 6 102 422
- US-A1- 2003 218 313

## Beschreibung

Die Erfindung betrifft eine Ankuppelhilfsvorrichtung für Zugkugelkupplungen an Anhängefahrzeugen, die zur Aufnahme einer Zugkugel an einem Zugfahrzeug mit einer Kugelpfanne versehen sind.

Bei einem üblichen Kupplungsvorgang fährt das Zugfahrzeug rückwärts an die Zugkugelkupplung des Anhängefahrzeugs heran, um nach Möglichkeit die Zugkugel unter der Kugelpfanne in der Zugkugelkupplung zu positionieren, wonach die Zugkugelkupplung bzw. das Anhängefahrzeug oder dessen Deichsel vorderseitig abgesenkt wird, bis die Zugkugel in der Kugelpfanne aufgenommen und arretiert ist. Da die Zugkugel nicht sichtbar ist und im Bereich der letzten Annäherung auch die Zugkugelkupplung des Anhängefahrzeugs für den Fahrer des Zugfahrzeugs nicht mehr sichtbar ist, werden gemäß US 4,254,968 als Hilfsvorrichtung jeweilige V-förmig entgegen der Fahrtrichtung abragende Führungsteile im Nahbereich der Kugelpfanne angeordnet. Ähnliche Konstruktionen sind in US 5,454,582 mit einem einstellbaren Anschlag für die Führungsteile versehen, in NL 1011706 ist das V-förmige Führungsteil einstückig ausgeführt, gemäß US 6,102,422 ist eine zusätzliche Sensorik im Bereich der V-Teile vorgesehen und bei den Vorrichtungen gemäß US 5,927,742 sowie US 2003/0218313 A1 sind die Führungsteile als V-förmige Einheit mit einer Tragkonstruktion unterhalb der Kugelpfanne gehalten, wobei hier die Führungsteile aus einer Gebrauchsstellung in eine Nichtgebrauchsstellung klappbar sind. Sämtliche dieser einen großen Einbauraum erfordernden Hilfsvorrichtungen sind in der Handhabung aufwendig und deren jeweils mit spitzem Winkel V-förmig ausgerichteten Führungsteile sind jeweils nur für eine spezielle Kupplungskonstruktion vorgesehen.

Die Erfindung befaßt sich mit dem Problem, eine Beschädigungen am Zugfahrzeug bei Durchführung eines Kupplungsvorganges vermeidende Ankuppelhilfsvorrichtung zu schaffen, die im Bereich eines geringen Einbauraum erfordernden Führungsteils mit geringem Stellaufwand an unterschiedliche Längen von Kupplungen anpaßbar ist und eine von Hand einfach ausführbare Einstell- und Klappbewegung mit unverlierbaren Sicherungsbauteilen ermöglicht.

Die Erfindung löst diese Aufgabe mit einer Ankupplungshilfsvorrichtung mit den Merkmalen des Anspruchs 1. Hinsichtlich wesentlicher weiterer Ausgestaltungen wird auf die Ansprüche 2 bis 17 verwiesen.

Das dem Anhängefahrzeug zugeordnete und mittels eines flachbauenden Trägers dicht unterhalb der Zugkugelkupplung des Anhängefahrzeugs abgestützte Leit- und Begrenzungsteil gelangt mit der Zugkugel oder dem Hals des Zugkugelhalters in Berührung, wenn bei Annäherung des Zugfahrzeugs an das Anhängefahrzeug die Zugkugel über die Kugelpfanne in der Zugkugelkupplung hinaus bewegt wird und hindert das Zugfahrzeug an einer weiteren Rückwärtsbewegung relativ zur Zugkugelkupplung, bei der eine Beschädigung des Zugfahrzeugs durch die Zugkugelkupplung eintreten könnte. Dabei erfüllt die Ankuppelhilfsvorrichtung ihre Leit- bzw. Ausrichtfunktion insbesondere dadurch, daß das als einfache Querschiene ausgebildete Leitund Begrenzungsteil eine in Draufsicht stumpfwinklige Vorderseite aufweist und damit einen vorteilhaft geringen Bauraum erfordert. Das Leit- und Begrenzungsteil weist insbesondere eine in Draufsicht stumpfwinklige Vorderseite mit einem Öffnungswinkel von ca. 170° auf, wobei mit einer entsprechenden Breite dieses Teils, die der 4- bis 5-fachen Breite der Zugkugel entspricht, eine besonders sichere Anlage erreicht wird.

Um unter allen Umständen sicherzustellen, daß die Zugkugelkupplung im Fahrbetrieb die vorgeschriebenen Bewegungsfreiheiten behält, wird das Leit- und Begrenzungsteil mittels eines Trägers aus einer Gebrauchsstellung in eine Nichtgebrauchsstellung durch eine Klappbewegung verlagert, so daß das als einfachbauende Querschiene ausgebildete Leit- und Begrenzungsteil mit geringem Überstand unter die Deichsel verlagerbar ist und im Fahrbetrieb die Bewegungsfreiheit des Anhängefahrzeugs nicht einschränkt wird. Der Träger des Leit- und Begrenzungsteils kann dabei zwei- oder mehrteilig ausgeführt sein, wobei das Leit- und Begrenzungsteil unmittelbar an einer Schwenkplatte gehalten ist und diese im Bereich einer nach Art eines Scharniers vorgesehenen Gelenkverbindung an einer Verbindungsplatte so gehalten ist, daß die Verlagerung um die horizontale Klappachse mit geringem Stellaufwand auf engem Raum möglich ist. Durch einen in Richtung der Klappachse axial verschiebbaren Achsbolzen in Form eines Steckdorns ist der Träger in der jeweiligen Gebrauchs- bzw. Nichtgebrauchsstellung verriegelbar, wobei der Steckdorn jeweils ortsfest in seiner Einbaulage verbleibt und dabei unverlierbar gesichert ist.

Weitere Einzelheiten und Wirkungen ergeben sich aus der nachfolgenden Beschreibung und der Zeichnung, in der mehrere Ausführungsbeispiele des Gegenstands der Erfindung näher veranschaulicht sind. In der Zeichnung zeigen:
- Fig. 1: eine abgebrochene Seitenansicht eines Zug- und eines Anhängefahrzeugs in einer Stellung zueinander nach mißglücktem Kupplungsversuch,
- Fig. 2: eine Ansicht ähnlich Fig. 1 mit einem mit einer Ankuppelhilfsvorrichtung versehenen Anhängefahrzeug zu Beginn eines Kupplungsvorganges,
- Fig. 3: eine Ansicht ähnlich Fig. 2 in einer Stellung der Fahrzeuge zueinander, die durch die Ankuppelhilfsvorrichtung begrenzt ist,
- Fig. 4: eine Ansicht ähnlich Fig. 3 nach Durchführung des Kupplungsvorganges,
- Fig. 5: eine Ansicht ähnlich Fig. 4 zur Veranschaulichung der Gebrauchsstellung einer um eine horizontale Achse in eine Nichtgebrauchsstellung klappbaren Ankuppelhilfsvorrichtung,
- Fig. 6: eine Ansicht ähnlich Fig. 5 mit in Nichtgebrauchsstellung befindlicher Ankuppelhilfsvorrichtung,
- Fig. 7: eine Draufsicht auf eine Ankuppelhilfsvorrichtung in Gebrauchsstellung, die um eine vertikale Achse in eine Nichtgebrauchsstellung klappbar ist,
- Fig. 8: eine Draufsicht ähnlich Fig. 7 mit in Nichtgebrauchsstellung befindlicher Ankuppelhilfsvorrichtung,
- Fig. 9: eine Seitenansicht ähnlich Fig. 5 zur Veranschaulichung einer horizontal in eine Nichtgebrauchsstellung verschieblich abgestützte Ankuppelhilfsvorrichtung,
- Fig. 10: eine Ansicht ähnlich Fig. 9 zur Veranschaulichung der Ankuppelhilfsvorrichtung in Nichtgebrauchsstellung,
- Fig. 11: eine vergrößerte Ausschnittsdarstellung ähnlich Fig. 5 mit einem mehrteiligen Träger im Bereich einer klappbaren Ankupplungshilfsvorrichtung,
- Fig. 12: eine Darstellung ähnlich Fig. 11 mit dem mehrteiligen Träger in unterschiedlichen Klappstellungen,
- Fig. 13: eine Perspektivdarstellung der Ankupplungshilfsvorrichtung mit dem mehrteiligen Träger und einer dessen vorderen Leit- und Begrenzungsteil tragende Tragplatte und einer Zwischenplatte,
- Fig. 14: eine Explosivdarstellung der Ankupplungshilfsvorrichtung gemäß Fig. 13,
- Fig. 15 und Fig. 16: jeweilige Draufsichten der Ankupplungshilfsvorrichtung mit dem mehrteiligen Träger, wobei dessen Tragplatte an der Zwischenplatte in unterschiedlichen Gebrauchsstellungen gehalten ist, und
- Fig. 17: eine Seitenansicht ähnlich Fig. 3 mit einem zur Ankupplungshilfsvorrichtung gerichteten Spiegelteil im Bereich des Anhängefahrzeugs.

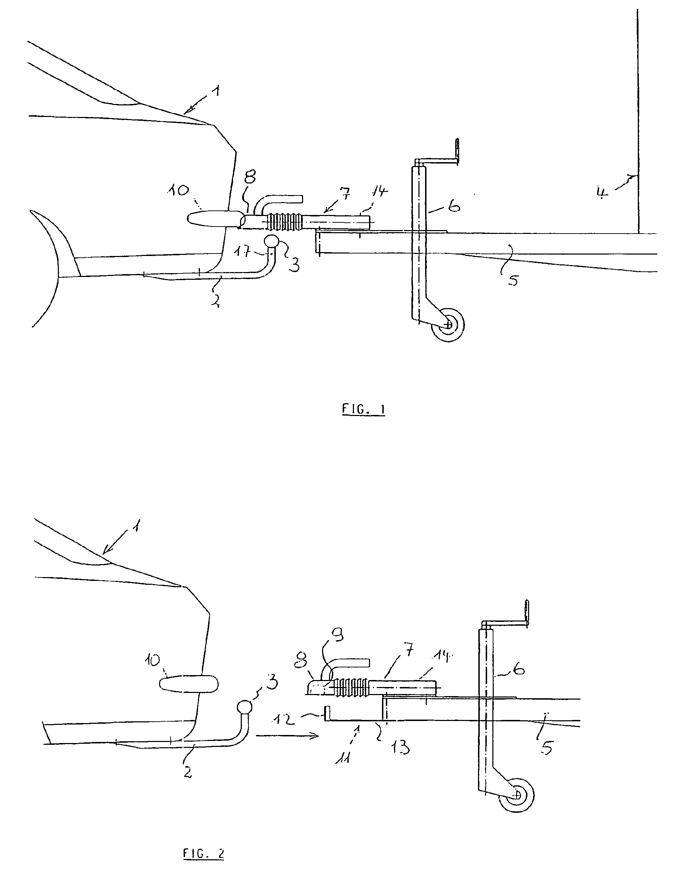

Fig. 1 veranschaulicht in abgebrochener Darstellung ein Zugfahrzeug 1 mit einem Halter 2 für eine Zugkugel 3 an seinem Fahrzeugheck. Ferner veranschaulicht Fig. 1 ein Anhängefahrzeug 4 mit einer Deichsel 5, einer verstellbaren Stützradeinheit 6 und einer Zugkugelkupplung 7, die in ihrem vorderen Gehäuseteil 8 eine Kugelpfanne 9 für die Aufnahme und Arretierung der Zugkugel 3 aufweist.

Der Fahrer des Zugfahrzeugs 1 hat bei der Darstellung der Teile in Fig. 1 das Zugfahrzeug 1 zu stark an das Anhängerfahrzeug 4 angenähert, so daß die Zugkugelkupplung 7 mit ihrem vorderen Gehäuseteil 8 mit der Stoßstange 10 des Zugfahrzeugs 1 kollidiert hat.

Die Erfindung vermeidet solche Kollisionen, die häufig mit kostenträchtigen Beschädigungen des Zugfahrzeugs einhergehen, durch eine Ankuppelhilfsvorrichtung 11, wie sie in den Fig. 2 bis 10 veranschaulicht ist. Die Ankuppelhilfsvorrichtung 11 besteht im einzelnen aus einem dicht, nämlich etwa 2 bis 6 cm, vorzugsweise etwa 4 cm, unterhalb der Zugkugelkupplung 7 des Anhängefahrzeugs 4 abgestütztes Leitund Begrenzungsteil 12, das an einem Träger 13 befestigt ist, der sich am vorderen Ende der Deichsel 5 des Anhängefahrzeugs 4 abstützt. Das Leit- und Begrenzungsteil 12 ist dabei zugleich in geringem Abstand von höchstens 5 cm hinter der Kugelpfanne 9 der Zugkugelkupplung 7 gelegen, so daß bei einem rückwärts Heranfahren des Zugfahrzeugs 1 an das Anhängefahrzeug 4 bei Kontakt zwischen dem Halter 2 bzw. der Zugkugel 3 und dem Leit- und Begrenzungsteil 12 die Zugkugelkupplung 7 mit ihrem vorderen Ende noch so weit vom Zugfahrzeug 1 entfernt ist, daß eine Kollision vermieden ist.

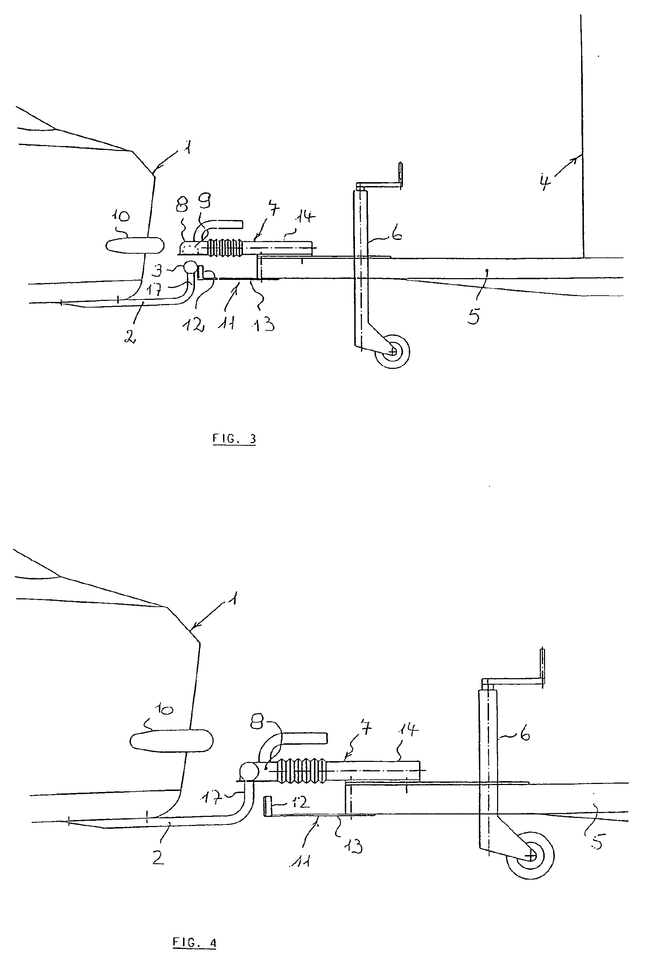

Dies veranschaulicht Fig. 3, die deutlich macht, daß das Leit- und Begrenzungsteil 12 aufgrund seiner Positionierung unter der Zugkugelkupplung 7 Kollisionen bei einem Annähern des Zugfahrzeugs 1 an das Anhängefahrzeug 4 wirksam verhindert. Anstelle der Anbringung des Trägers 13 für das Leit- und Begrenzungsteil 12 an der Deichsel 5 des Anhängefahrzeugs kann das Trägerteil auch mit dem rückwärtigen, fest mit der Deichsel 5 verbundenen Gehäuseteil 14 der Zugkugelkupplung 7 verbunden sein.

Fig. 4 veranschaulicht die Teile in Kupplungsstellung nach Abschluß des Kupplungsvorganges. Da in dieser Stellung der Teile zueinander die vorgeschriebenen Bewegungsfreiheiten der Zugkugelkupplung 7 relativ zur Zugkugel 3 des Zugfahrzeugs 1 eingeschränkt sein können, kann die Ankuppelhilfsvorrichtung 11 zwischen einer Gebrauchsstellung, wie sie bei Durchführung des Kupplungsvorganges erwünscht ist, und einer Nichtgebrauchsstellung, wie sie während des Fahrbetriebes des Gespannes erwünscht ist, bewegbar sein, wobei es sich versteht, daß die Ankuppelhilfsvorrichtung 11 sowohl in ihrer Gebrauchsstellung als auch in ihrer Nichtgebrauchsstellung jeweils durch eine lösbare Verriegelung fixiert ist.

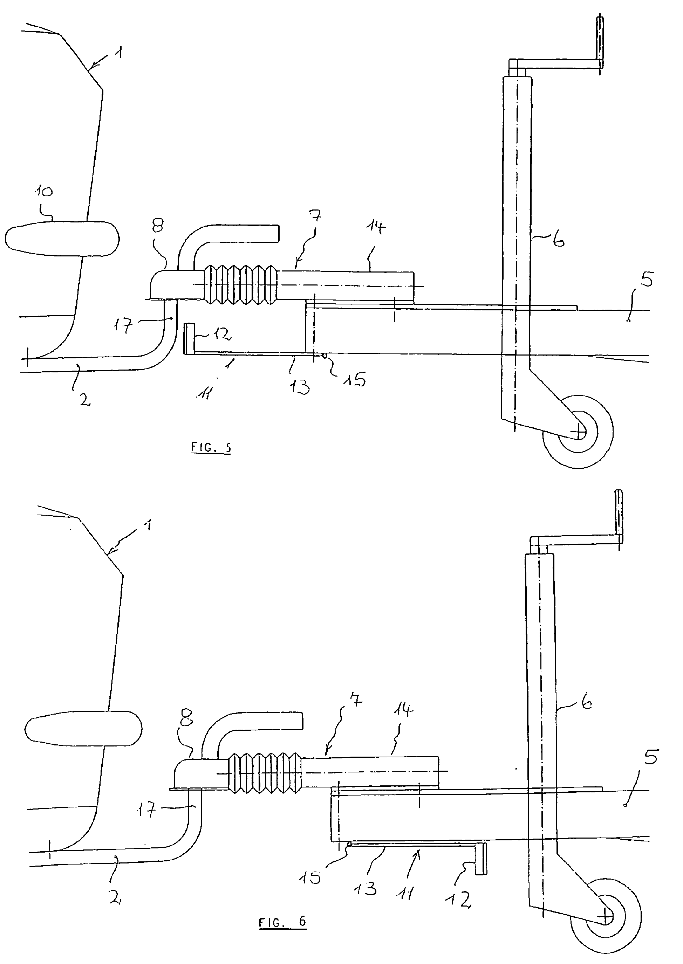

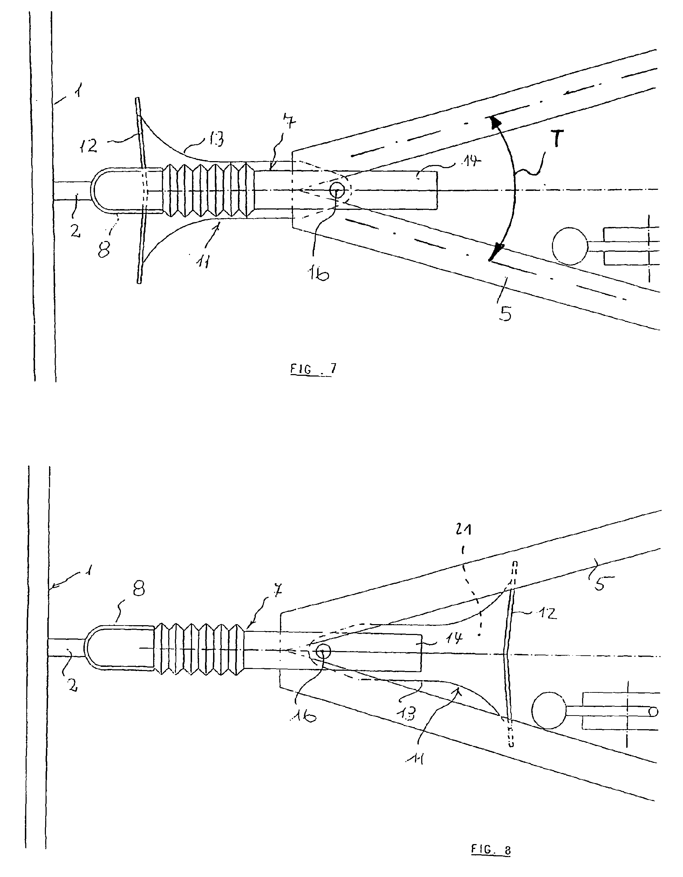

Fig. 5 veranschaulicht eine Ankuppelhilfsvorrichtung 11, bei der ihr Träger 13 um eine horizontale Klappachse 15 klappbar abgestützt ist, damit sie aus der Gebrauchsstellung gemäß Fig. 5 in die Nichtgebrauchsstellung geklappt werden kann, wie sie in Fig. 6 veranschaulicht ist. Fig. 7 zeigt in einer Draufsicht die Ankuppelhilfsvorrichtung 11 in einer Ausführung, bei der ihr Träger 13 um eine vertikale Klappachse 16 aus ihrer in Fig. 7 veranschaulichten Gebrauchsstellung in eine in Fig. 8 dargestellte Nichtgebrauchsstellung klappbar ist.

Fig. 7 verdeutlicht zugleich die Ausbildung des Leit- und Begrenzungsteils 12 als Querschiene, die eine Quererstreckung aufweist, die etwa dem 4- bis 5-fachen der Breite des die Zugkugel 3 in der Kugelpfanne 9 aufnehmenden vorderen Gehäuseteils 8 der Zugkugelkupplung 7 entspricht. Das Leit- und Begrenzungsteil 12 hat dabei eine Höhe, die höchstens der Länge des Halsteils 17 des Halters 2 für die Zugkugel 3 entspricht. Die Querschiene 12 hat bevorzugt in Draufsicht eine stumpfwinklige Vorderseite, bei der der Öffnungswinkel 165° bis 175°, vorzugsweise etwa 170°, beträgt. Dadurch erhält das Leit- und Begrenzungsteil 12 eine Leit- bzw. Ausrichtfunktion, durch die die Zugkugel 3 in ihre Ankuppelposition unterhalb der Kugelpfanne 9 der Zugkugelkupplung 7 gelangt, wenn der Halsteil 17 des Halters 2 der Zugkugel 3 in Kontakt mit dem Leit- und Begrenzungsteil 12 gelangt und an diesem entlanggleitend die Mittelposition an dem Leit- und Begrenzungsteil 12 einzunehmen bestrebt ist.

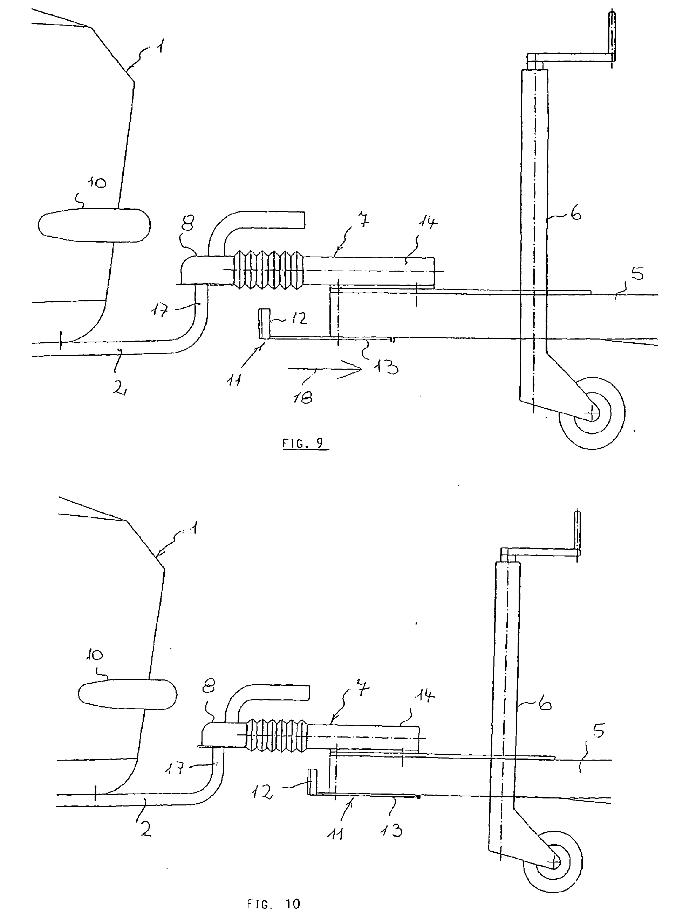

Die Fig. 9 zeigt weiterhin eine Ausführungsform der Ankuppelhilfsvorrichtung 11, die entlang der sie abstützenden Deichsel 5 des Anhängefahrzeugs 4 horizontal verschieblich abgestützt ist, wie das der Pfeil 18 versinnbildlicht. In Fig. 9 hat die Ankuppelhilfsvorrichtung 11 ihre Gebrauchsstellung verlassen und ist auf dem Wege in die Nichtgebrauchsstellung gemäß Fig. 10, in der sichergestellt ist, daß während des Fahrbetriebs keine Kollisionen zwischen dem Leit- und Begrenzungsteil 12 und Teilen des Zugfahrzeugs 1 eintreten können.

Das Leit- und Begrenzungsteil 12 besteht vorzugsweise wie sein Träger 13 aus Metall, insbesondere Stahl, kann jedoch auch aus nicht metallischem Material wie beispielsweise fasererstärktem Kunststoff bestehen.

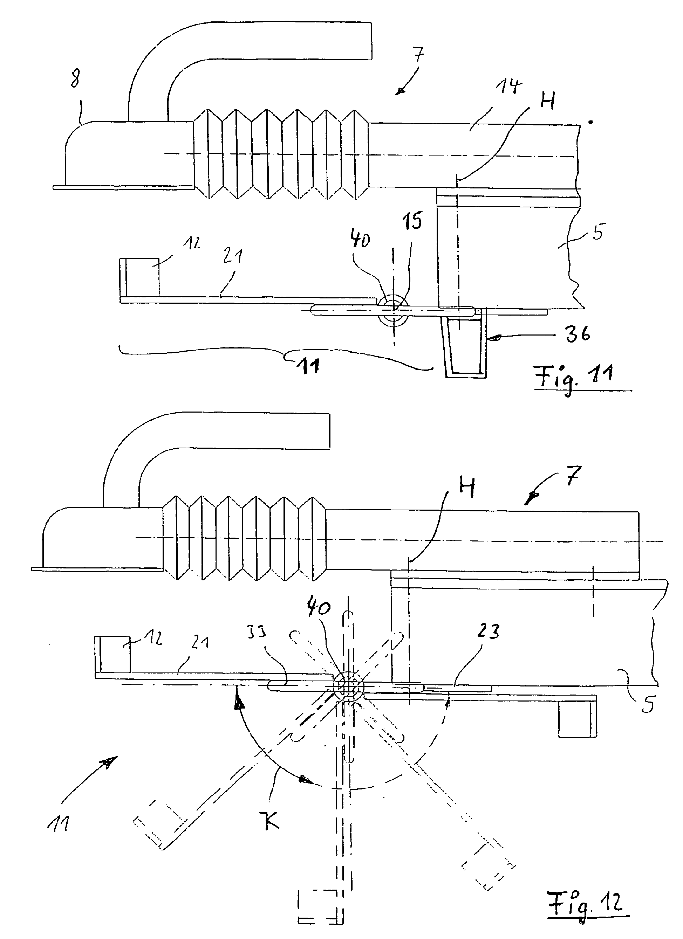

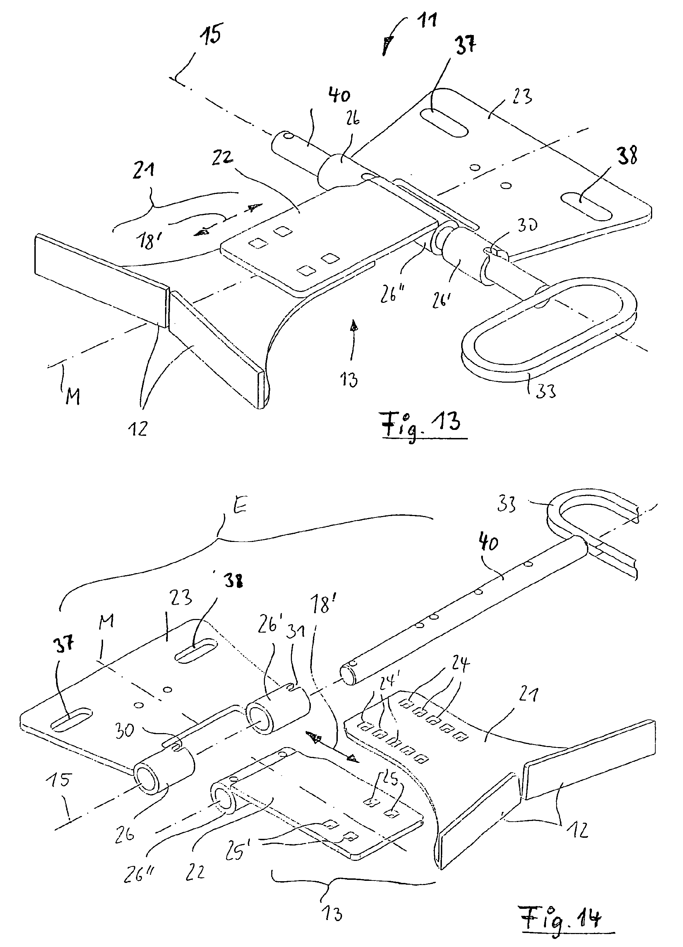

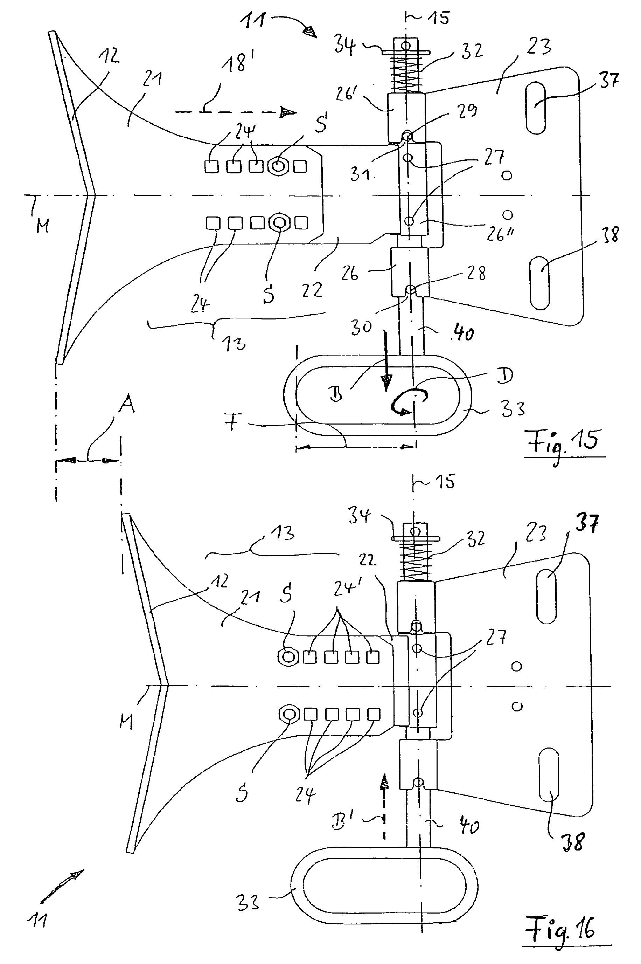

Eine Zusammenschau von Fig. 6, Fig. 8 und Fig. 11 bis Fig. 16 verdeutlicht, daß das als eine flachbauende Querschiene ausgebildete Leit- und Begrenzungsteil 12 im Bereich des Trägers 13 mit einer um die horizontale Klappachse 15 bewegbaren Tragplatte 21 als raumsparend festlegbares Teil versehen ist. Bei dieser konstruktiven Ausführung ist der Träger 13 im Bereich der Tragplatte 21 mit zumindest einer zusätzlichen Zwischenplatte 22 (Fig. 13) versehen, so daß dieser mehrteilige Träger 13 um die Klappachse 15 zu einer an der Deichsel 5 gehaltenen Verbindungsplatte 23 hin geschwenkt werden kann (Fig. 12). Gleichzeitig ist die Verbindung zwischen der Tragplatte 21 und der Zwischenplatte 22 so gestaltet, daß eine horizontale Verschieblichkeit (Pfeil 18') unterschiedliche Gebrauchslagen für den Träger 13 bzw. das Leit- und Begrenzungsteil 12 definiert (Fig. 15; ähnlich: Fig. 9 - Pfeil 18).

Die aus der Zusammenschau von Fig. 11 und 12 ersichtliche Klappbewegung im Bereich des mehrteiligen Trägers 13 (Strichdarstellungen gemäß Pfeil K) ist dadurch gesteuert, daß im Bereich der Klappachse 15 eine nach Art eines Scharniers wirksame Stützbaugruppe als Schwenkverbindung vorgesehen ist. Dazu ist ein steck dorn 40 vorgesehen, der einerseits die Zwischenplatte 22 und andererseits eine an der Deichsel 5 festlegbare Verbindungsplatte 23 im Bereich der Klappachse 15 erfaßt.

Die Detaildarstellungen gemäß Fig. 13 und 14 verdeutlichen eine weitere vorteilhafte Ausgestaltung der Vorrichtung 11, wobei die den hier zweiteiligen Leit- und Begrenzungsteil 12 tragende Tragplatte 21 in Richtung der Längsmittelebene M der Vorrichtung jeweilige in parallelem Abstand vorgesehenen Reihen von Verbindungsöffnungen 24, 24' aufweist, die paarweise in jeweilige Übereinanderlage mit in der Zwischenplatte 22 vorgesehenen Öffnungen 25, 25' verbringbar sind (Fig. 14). Damit ist die mit Pfeil 18' angedeutete Verstellbarkeit erreicht, wobei ein Vergleich von jeweiligen Verbindungsstellungen in Fig. 15 und 16 zeigt, daß die Tragplatte 21 durch jeweilige Schrauben S o. dgl. Verbinder in unterschiedlichen Lagen fixierbar (Abstand A) und damit der Leit- und Begrenzungsteil 12 in jeweiligen Gebrauchsstellungen positionierbar ist. In der horizontalen Gebrauchsstellung der Vorrichtung 11 wird damit eine Anpassung an unterschiedliche Konstruktionen der Deichsel 5 bzw. der Zugkugelkupplung 7 erreicht (Fig. 9), so daß die Zugkugel 3 optimal zur Kugelpfanne 9 positionierbar ist.

Die Anzahl der Verbindungsöffnungen 24, 24' bzw. 25, 25' ist weitgehend variabel, wobei in der dargestellten Ausführung im Bereich der Zwischenplatte 22 zwei Paare der Öffnungen 25, 25' vorgesehen sind, so daß im Bedarfsfall auch gleichzeitig eine Verbindung durch vier der Schrauben S möglich ist (nicht dargestellt).

In Fig. 15 und 16 wird auch deutlich, daß die die Klappachse 15 aufweisende Scharnierverbindung im Bereich des Steckdorns 40 jeweilige Stiftansätze 28, 29 aufweist, die in jeweilige Formausnehmungen 30, 31 einführbar sind. Diese Formausnehmungen 30, 31 sind im Bereich der an den Platten 22 und 23 vorgesehenen Steckhülsenansätze 26, 26', 26" (Fig. 14) vorgesehen. Durch eine formschlüssige Verbindung der Stiftansätze 28, 29 in den Formausnehmungen 30, 31 (Fig. 15) ist eine drehfeste Halterung für den Steckdorn 40 erreicht und damit eine Fixierung des Trägers 13 bzw. dessen Tragplatte 21 zumindest in den gemäß Fig. 6 bzw. Fig. 12 ersichtlichen End-Stellungen möglich. Denkbar ist dabei auch, daß um 180° versetzt zu den Ansätzen 28, 29 und Formausnehmungen 30, 31 weitere derartige Verbinder vorgesehen sind (nicht sichtbar).

Zur Schwenk-Bedienung des Trägers 13 werden die an dem Steckdorn 40 befindlichen Steckansätze 28 und 29 durch eine Zugbewegung in einer Pfeilrichtung B aus den Formausnehmungen 31 und 32 herausbewegt, so daß in dieser radialen Freigabestellung der Träger 13 bzw. die an diesem durch Haltestifte 27 fixierten Platten 22 und 23 als Einheit um die Klappachse 15 frei schwenkbar sind (Pfeil D). Diese Zugbewegung in Pfeilrichtung B erfolgt dabei entgegen der Wirkung einer endseitig am Steckdorn 40 durch einen Stützring 34 gehaltenen Druckfeder 32, so daß bei Erreichen der vorgesehenen Klapp-Stellung des Trägers 13 durch eine Freigabe des Steckdornes 40 in axialer Richtung eine Verlagerung in Wirkrichtung der Druckfeder 32 (Pfeilrichtung B') möglich wird und damit durch Einrasten der Haltestifte in die Formausnehmungen die Fixierung des Trägers 13 erreicht ist.

Zur vorbeschriebenen Handhabung des Steckdorns 40 bei dessen axialer Zugverlagerung (Pfeil B) und Schwenkung (Pfeil D, Fig. 12) ist ein Handgriff 33 vorgesehen, der insbesondere in einer asymmetrisch zur Klappachse 15 gelegenen Einbaulage mit dem Steckdorn 40 verbunden ist (Länge F, Fig. 15). Die Schwenkung D des Handgriffes 33 bewirkt bei dessen Verlagerung eine Nichtgebrauchsstellung im Nahbereich der hinteren Verbindungsplatte 23, wobei der Handgriff durch die Feder 32 in die Verbindungs-Stellungen bei 28, 29 und 30, 31 zurückgezogen wird und danach einen vorteilhaft geringen Überstand aufweist.

Mit der Explosivdarstellung gemäß Fig. 14 wird deutlich, daß das Leit- und Begrenzungsteil 12 mit dem die Tragplatte 21, die Zwischenplatte 22 und die Verbindungsplatte 24 aufweisenden Träger 13 eine modulare Baueinheit E bildet, die durch variable Bauteilgestaltung einzelner oder sämtlicher der Einzelteile mit geringem Aufwand an unterschiedliche Ausführungen von Zugfahrzeugen 1 bzw. Anhängefahrzeugen 4 anpaßbar ist.

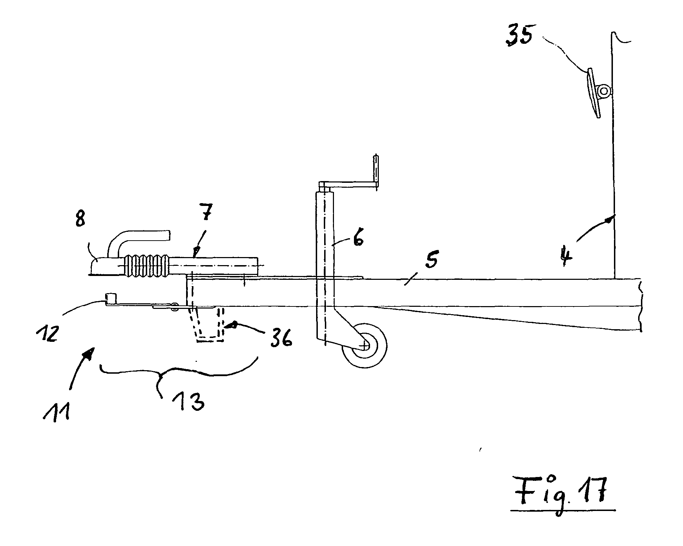

In Fig. 17 ist die Ankuppelhilfsvorrichtung in einer Seitenansicht ähnlich Fig. 1 dargestellt, wobei ein am Anhängefahrzeug 4 vorgesehener Spiegel 35 als zusätzliche optische Kupplungshilfe deutlich wird.

Zur Festlegung der Vorrichtung 11 an der Deichsel 5 sind jeweilige in einer Verbindungsachse H (Fig. 12) verlaufende Schraubverbindungen (nicht dargestellt) vorgesehen, wobei diese jeweilige als Langlöcher 37, 38 ausgebildete Verbindungsöffnungen im Bereich der Verbindungsplatte 23 durchgreifen. Diese in der dargestellten Ausführung quer zur Mittellängsebene M ausgerichteten Langlöcher 37, 38 ermöglichen eine einfache Anpassung an unterschiedliche Spreizwinkel (T; Fig. 7) der V-förmigen Enden der Deichsel 5, so daß die Vorrichtung 11 für unterschiedliche Konstruktionen anwendbar ist. Zusätzlich kann im Bereich dieses Deichselendes 5 auch ein Stützfuß 36 (Fig. 11, Fig. 17) vorgesehen sein, mit dem die Deichsel 5 für eine Bedienperson sicher auf dem Boden ablegbar ist.

## Patentansprüche

1. Ankupplungshilfsvorrichtung an Anhängefahrzeugen (4) mit einer Zugkugelkupplung (7), die zur Aufnahme einer Zugkugel (3) an einem Zugfahrzeug (1) mit einer ein Gehäuseteil (8) aufweisenden Kugelpfanne (9) versehen ist und wobei dicht unterhalb dieser Zugkugelkupplung (7) ein am Anhängefahrzeug (4) mittels eines Trägers (13) abgestütztes Leit- und Begrenzungsteil (12) vorgesehen ist, das zumindest bereichsweise in geringem Abstand unter der Kugelpfanne (9) der Zugkugelkupplung (7) gelegen ist und eine die Breite eines Halters (2) der Zugkugel (3) übersteigende, horizontale Erstreckung quer zur Zugachse des Anhängefahrzeugs (4) aufweist und dabei das Leit- und Begrenzungsteil (12) um eine horizontale Klappachse (15) aus einer Gebrauchsstellung in eine Nichtgebrauchsstellung bewegbar und in beiden Stellungen durch eine lösbare Verriegelung gesichert ist, **dadurch gekennzeichnet, daß** als Leit- und Begrenzungsteil (12) eine horizontale Tragplatte (21) mit vorderseitiger abgewinkelter Querschiene vorgesehen ist, diese eine in Draufsicht stumpfwinklige Vorderseite mit einem Öffnungswinkel von etwa 165° bis 175°, vorzugsweise etwa 170°, aufweist und dabei die in der Ebene der Tragplatte (21) rückseitig an dieser gelegene horizontale Klappachse (15) von einer nach Art eines Scharniers wirksamen Stützbaugruppe mit einem Steckdorn (40) gebildet ist, derart, daß zu einer am Anhängefahrzeug (4) fixierbaren Verbindungsplatte (23) hin eine Schwenkverbindung für die Tragplatte (21) erreicht ist.

2. Vorrichtung nach Anspruch 1, **dadurch gekennzeichnet, daß** das als Querschiene ausgebildete Leit- und Begrenzungsteil (12) eine etwa dem 4- bis 5-fachen der Breite des die Zugkugel (3) aufnehmenden Gehäuseteils (8) der Zugkugelkupplung (7) entsprechende Quererstreckung aufweist und die Oberkante des Leit- und Begrenzungsteils (12) etwa 2 cm bis 6 cm unter der Unterseite des die Kugelpfanne (9) aufweisenden Gehäuseteils (8) der Zugkugelkupplung (7) verläuft.

3. Vorrichtung nach Anspruch 1 oder 2, **dadurch gekennzeichnet, daß** das Leitund Begrenzungsteil (12) eine Höhe aufweist, die höchstens der Länge des Halsteils (17) des Zugkugelhalters (2) entspricht.

4. Vorrichtung nach einem der Ansprüche 1 bis 3, **dadurch gekennzeichnet, daß** das Leit- und Begrenzungsteil (12) in einem Abstand von höchstens 5 cm hinter dem in Zugrichtung rückwärtigen Rand der Kugelpfanne (9) gelegen ist.

5. Vorrichtung nach einem der Ansprüche 1 bis 4, **dadurch gekennzeichnet, daß** der Träger (13) des Leit- und Begrenzungsteils (12) aus seiner Gebrauchsstellung in die Nichtgebrauchsstellung horizontal verschieblich abgestützt ist.

6. Vorrichtung nach einem der Ansprüche 1 bis 5, **dadurch gekennzeichnet, daß** das Leit- und Begrenzungsteil (12) an der Zugkugelkupplung (7) oder der Zugdeichsel (5) des Anhängefahrzeugs (4) abgestützt ist.

7. Vorrichtung nach einem der Ansprüche 1 bis 6, **dadurch gekennzeichnet, daß** die mit dem Leit- und Begrenzungsteil (12) verbundene Tragplatte (21) an einer im Bereich der Klappachse (15) schwenkbaren Zwischenplatte (22) horizontal verschieblich (Pfeil 18') gehalten ist.

8. Vorrichtung nach einem der Ansprüche 1 bis 7, **dadurch gekennzeichnet, daß** die den Leit- und Begrenzungsteil (12) tragende Tragplatte (21) parallel zur Längsmittelebene (M) der Vorrichtung (11) jeweilige Reihen von Verbindungsöffnungen (24, 24') aufweist, die in jeweilige Übereinanderlage mit in der Zwischenplatte (22) vorgesehenen Öffnungen (25, 25') verbringbar sind, derart, daß die Tragplatte (21) durch jeweilige Schraubverbindungen (S) o. dgl. in unterschiedlichen horizontalen Lagen fixierbar ist.

9. Vorrichtung nach Anspruch 8, **dadurch gekennzeichnet, daß** die Zwischenplatte (22) zwei Paare der Öffnungen (25, 25') aufweist.

10. Vorrichtung nach einem der Ansprüche 1 bis 9, **dadurch gekennzeichnet, daß** die die Klappachse (15) aufweisende Schamierverbindung im Bereich des jeweilige an den Platten (22, 23) befindliche Steckhülsenansätze (26, 26'; 26") durchgreifenden Steckdorns (40) mit Stiftansätzen (28, 29) versehen ist.

11. Vorrichtung nach Anspruch 10, **dadurch gekennzeichnet, daß** die am Steckdom (40) gehaltenen Steckansätze (28, 29) in Richtung der Klappachse (15) in jeweilige in den Platten (23, 23') bzw. den Steckhülsenansätzen (26, 26', 26") vorgesehene Formausnehmungen (30, 31) einführbar und aus diesen herausziehbar sind.

12. Vorrichtung nach Anspruch 10 oder 11, **dadurch gekennzeichnet, daß** die an dem Steckdorn (40) befindlichen Stiftansätze (28, 29) beim Herausziehen (Pfeil B) aus den Formausnehmungen (30, 31) entgegen der Wirkung einer Druckfeder (32) verlagerbar sind.

13. Vorrichtung nach einem der Ansprüche 10 bis 12 **dadurch gekennzeichnet, daß** am Steckdorn (24) ein diesen asymmetrisch erfassender Handgriff (33) vorgesehen ist.

14. Vorrichtung nach einem der Ansprüche 1 bis 13, **dadurch gekennzeichnet, daß** das Leit- und Begrenzungsteil (12) mit dem die Tragplatte (21), die Zwischenplatte (22) und die Verbindungsplatte (23) aufweisenden Träger (13) eine modulare Baueinheit bildet.

15. Vorrichtung nach einem der Ansprüche 1 bis 14, **dadurch gekennzeichnet, daß** diese im Bereich der Verbindungsplatte (23) jeweilige zur Festlegung des Trägers (13) an der Deichsel (5) vorgesehene Langlöcher (37, 38) o. dgl. Verbindungsöffnungen aufweist.

16. Vorrichtung nach Anspruch 15, **dadurch gekennzeichnet, daß** diese mittels der Langlöcher (37, 38) an unterschiedliche Einbaulagen im Bereich des V-förmig zusammengeführten Endes der Deichsel (5) anpaßbar ist.

17. Vorrichtung nach einem der Ansprüche 1 bis 16, **dadurch gekennzeichnet, daß** diese im Bereich des Trägers (13) bzw. dem vorderen V-Ende der Deichsel (5) mit einem zusätzlichen Stützfuß (36) versehen ist.

## Claims

1. Coupling aid on trailer vehicles (4) which have a ball-type towing hitch (7) which, to receive a towing ball (3) on a towing vehicle (1), is provided with a socket (9) which has a main-body part (8), and there being provided, close to and below the said ball-type towing hitch (7), a directing and limit-setting part (12) which is supported on the trailer vehicle (4) by means of a carrier (13) and of which at least a region or regions is positioned a short distance below the socket (9) of the ball-type towing hitch (7) and which extends horizontally, transversely to the axis on which the trailer vehicle is towed (4), for a distance greater than the width of a mounting (2) for the towing ball (3) and the directing and limit-setting part (12) can, in this case, be moved from an in-use position to an out-of-use position about a horizontal axis of fold (15) and is secured in both positions by a releasable locking arrangement, **characterised in that** what is provided as the direction and limit-setting part (12) is a horizontal supporting plate (21) having at the front end an angled transverse bar, **in that** this latter has, when seen in plan, an obtuse-angled front face having an included angle of approximately 165° to 175° and preferably of 170°, and the horizontal axis of fold (15), which is situated in the plane of the supporting plate (21) at the rear end thereof, is created by a supporting assembly, having an insertable rod (40), which acts in a similar way to a hinge, the horizontal axis of fold (15) being created in such a way that a connection is obtained to allow the supporting plate (21) to pivot towards a connecting plate (23) which can be fixed to the trailer vehicle (4).

2. Aid according to claim 1, **characterised in that** the directing and limit-setting part (12) in the form of a transverse bar is of a transverse extent which corresponds to approximately four to five times the width of the main-body part (8) of the ball-type towing hitch (7), which main-body part (8) receives the towing ball (3), and the top edge of the directing and limit-setting part (12) extends at a point approximately 2 cm to 6 cm below the underside of the main-body part (8) of the ball-type towing hitch (7), which main-body part (8) has the socket (9).

3. Aid according to claim 1 or 2, **characterised in that** the directing and limit-setting part (12) is of a height which corresponds to not more than the length of the neck part (17) of the towing-ball mounting (2)

4. Aid according to one of claims 1 to 3, **characterised in that** the directing and limit-setting part (12) is positioned a distance of not more than 5 cm behind that edge of the socket (9) which is at the rear in the direction of towing.

5. Aid according to one of claims 1 to 4, **characterised in that** the carrier (13) of the directing and limit-setting part (12) is supported to be displaceable horizontally from its in-use position to its out-of-use position.

6. Aid according to one of claims 1 to 5, **characterised in that** the directing and limit-setting part (12) is supported on the towing hitch (7) or the tow-bar (5) of the trailer vehicle (4).

7. Aid according to one of claims 1 to 6, **characterised in that** the supporting plate (21) which is connected to the directing and limit-setting part (12) is mounted to be horizontally displaceable (arrow 18') on an intermediate plate (22) which is pivotable in the region of the axis of fold (15).

8. Aid according to one of claims 1 to 7, **characterised in that** the supporting plate (21) which supports the directing and limit-setting part (12) has, parallel to the longitudinal centre plane (M) of the device (11), rows of connecting openings (24, 24') which can be brought into coincidence with respective openings (25, 25') which are provided in the intermediate plate (22), in such a way that the supporting plate (21) can be fixed in different horizontal positions by respective screwed or bolted connections (S) or the like.

9. Aid according to claim 8, **characterised in that** the intermediate plate (22) has two pairs of the openings (25, 25').

10. Aid according to one of claims 1 to 9, **characterised in that** the hinged joint having the axis of fold (15) is provided, in the region of the insertable rod (40) which passes through short sleeves for insertion (26, 26'; 26") which are situated on respective ones of the plates (22, 23), with stub pins (28, 29).

11. Aid according to claim 10, **characterised in that** the stub pins (28, 29) which are held in the insertable rod (40) can be inserted into, and can be withdrawn from, in the direction defined by the axis of fold (15), respective shaped recesses (30, 31) which are provided in the plates (23, 23'), or rather in the short sleeves for insertion (26, 26'; 26").

12. Aid according to claim 10 or 11, **characterised in that** the stub pins (28, 29) situated on the insertable rod (40) can be displaced in opposition to the action of a compression spring (32) when being withdrawn (arrow B) from the shaped recesses (30,31).

13. Aid according to one of claims 10 to 12, **characterised in that** there is provided on the insertable rod (24) a handle (33) which engages therewith asymmetrically.

14. Aid according to one of claims 1 to 13, **characterised in that,** with the carrier (13) having the supporting plate (21), intermediate plate (22) and connecting plate (23), the directing and limit-setting part (12) forms a modular unit structure.

15. Aid according to one of claims 1 to 14, **characterised in that** it has, in the region of the connecting plate (23), respective slotted holes (37, 38) or the like connecting openings which are intended to allow the carrier (13) to be fastened to the tow-bar (5).

16. Aid according to claim 15, **characterised in that,** by means of the slotted holes (37, 38), it can be adjusted to different installed positions in the region of that end of the tow-bar (5) which comes together in a V-shape.

17. Aid according to one of claims 1 to 16, **characterised in that** it is provided, in the region of the carrier (13) or the front V-end of the tow-bar (5), with an additional supporting foot (36).

## Revendications

1. Dispositif d'aide à l'attelage pour des remorques (4) équipées d'un attelage à boule de remorquage (7), comportant une coupelle à boule (9) munie d'une partie de boîtier (8) pour recevoir une boule de remorquage (3) d'un véhicule remorqueur (1), et directement sous ce dispositif d'attelage à boule (7), il est prévu une pièce de guidage et de limitation (12) s'appuyant sur la remorque (4) par un support (13), cette pièce étant située au moins par endroits à faible distance sous la coupelle à boule (9) de l'attelage à boule de remorquage (7) et ayant une extension horizontale dépassant la largeur du support (2) de la boule de traction (3), dans l'extension horizontale transversalement à l'axe de traction du véhicule remorqueur (4) et la pièce de guidage et de limitation (12) pouvant se déplacer autour d'un axe de basculement (15) horizontal pour passer d'une position d'utilisation à une position de non utilisation, en étant fixée dans chacune des deux positions par un moyen de verrouillage amovible,
**caractérisé en ce que**
la pièce de guidage et de délimitation (12) comporte une plaque de support (21) horizontale, avec un rail transversal plié au niveau du côté avant, et en vue de dessus ce côté avant a une forme d'angle obtus d'ouverture de l'ordre de 160° à 175°, de préférence de l'ordre de 170° et l'axe de basculement (15), horizontal, situé dans le plan de la plaque de support (21), sur le côté arrière de celle-ci, est formé par un ensemble d'appui coopérant à la manière d'une charnière avec une broche (40) de façon à réaliser une liaison basculante pour la plaque de support (21) par rapport à un plaque de liaison (23) qui se fixe à la remorque (4).

2. Dispositif selon la revendication 1,
**caractérisé en ce que**
la pièce de guidage et de limitation (12) en forme de rail transversal présente une dimension transversale correspondant sensiblement à 4-5 fois la largeur de la partie de boîtier (8) de l'attelage à boule de remorquage (7) recevant la boule de remorquage (3) et l'arête supérieure de la pièce de guidage et de limitation (12) passe environ à 2 cm jusqu'à 6 cm sous la face inférieure de la partie de boîtier (8) de l'attelage à boule de remorquage (7) comportant la coupelle à boule (9).

3. Dispositif selon la revendication 1 ou 2,
**caractérisé en ce que**
la pièce de guidage et de limitation (12) a une hauteur qui correspond au plus à la longueur de la pièce coudée(17) du support de boule de remorquage (2).

4. Dispositif selon l'une des revendications 1 à 3,
**caractérisé en ce que**
la pièce de guidage et de limitation (12) se situe à une distance au maximum égale à 5 cm derrière le bord arrière de la coupelle de remorquage (9) selon la direction de remorquage.

5. Dispositif selon l'une des revendications 1 à 4,
**caractérisé en ce que**
le support (13) de la pièce de guidage et de limitation (12) est soutenu de manière coulissante horizontalement entre sa position d'utilisation et sa position de non utilisation.

6. Dispositif selon l'une des revendications 1 à 5,
**caractérisé en ce que**
la pièce de guidage et de limitation (12) est soutenue par l'attelage à boule de remorquage (7) ou le timon de remorquage (5) de la remorque (4).

7. Dispositif selon l'une des revendications 1 à 6,
**caractérisé en ce que**
la plaque de support (21) reliée à la pièce de guidage et de limitation (12) est tenue de façon coulissante horizontalement (flèche 18') à une plaque intermédiaire (22) pivotante au niveau de l'axe de basculement (15).

8. Dispositif selon l'une des revendications 1 à 7,
**caractérisé en ce que**
la plaque de support (21) qui porte la pièce de guidage et de limitation (12) comporte des rangées respectives d'orifices de liaison (24, 24') parallèles au plan longitudinal médian (M), ces orifices pouvant être en concordance dans la position de superposition respective, avec des orifices (25, 25') prévus dans la plaque intermédiaire (22) de façon que la plaque de support (21) se fixer par des liaisons vissées (S) respectives ou des moyens analogues dans différentes positions horizontales.

9. Dispositif selon la revendication 8,
**caractérisé en ce que**
la plaque intermédiaire (22) comporte deux paires d'orifices (25, 25').

10. Dispositif selon l'une des revendications 1 à 9 ,
**caractérisé en ce que**
la liaison à charnière comportant l'axe de basculement (15) est munie, dans la région des manchons d'enfichage (26, 26', 26") prévus sur les plaques (22, 23), d'éléments de broche (28, 29) traversant la broche d'enfichage (40).

11. Dispositif selon la revendication 10,
**caractérisé en ce que**
les éléments d'enfichage (28, 29) portés par la broche d'enfichage (40) peuvent s'introduire ou s'extraire dans des cavités de forme (30, 31) prévues respectivement dans les plaques (23, 23') ou les manchons d'enfichage (26, 26', 26").

12. Dispositif selon la revendication 10 ou 11,
**caractérisé en ce que**
les éléments de broche (28, 29) portés par la broche d'enfichage (40) se dégagent des cavités (30, 31) lors du mouvement d'extraction (flèche B) en agissant contre la direction d'action d'un ressort de compression (32).

13. Dispositif selon l'une des revendications 10 à 12,
**caractérisé en ce que**
la broche d'enfichage comporte une poignée (33) à saisie asymétrique.

14. Dispositif selon l'une des revendications 1 à 13,
**caractérisé en ce que**
la pièce de guidage et de limitation (12) forme une unité modulaire avec le support (13) muni de la plaque de support (21), de la plaque intermédiaire (22) et de la plaque de liaison (23).

15. Dispositif selon l'une des revendications 1 à 14,
**caractérisé en ce qu'**
il comporte au niveau de la plaque de liaison (23) des orifices longitudinaux (37, 38) ou orifices de liaison analogues prévus sur le timon (5), pour la fixation au support (13).

16. Dispositif selon la revendication 15,
**caractérisé en ce qu'**
il s'adapte par les trous oblongs (37, 38) à des positions de montage différentes dans la région de l'extrémité d'assemblage en forme de V du timon (5).

17. Dispositif selon l'une des revendications 1 à 16,
**caractérisé par**
une chandelle supplémentaire (36) ans la région du support (13) ou de l'extrémité avant en forme de V du timon (5).
